Europäisches Patentamt

European Patent Office

Office européen des brevets

(19)

(11) Veröffentlichungsnummer: **0 134 049**

**B1**

(12) # EUROPÄISCHE PATENTSCHRIFT

(45) Veröffentlichungstag der Patentschrift:
**21.09.88**

(21) Anmeldenummer: **84201072.0**

(22) Anmeldetag: **18.07.84**

(51) Int. Cl.⁴: **G 02 F 1/29,** G 02 B 27/28,
G 02 B 6/28

(54) Optische Verzweigungsvorrichtung.

(30) Priorität: **29.07.83 DE 3327417**

(43) Veröffentlichungstag der Anmeldung:
**13.03.85 Patentblatt 85/11**

(45) Bekanntmachung des Hinweises auf die Patenterteilung:
**21.09.88 Patentblatt 88/38**

(84) Benannte Vertragsstaaten:
**DE FR GB IT NL SE**

(56) Entgegenhaltungen:
DE-A-2 947 730
DE-A-3 124 488
DE-A-3 231 894
US-A-3 989 352

APPLIED OPTICS, Vol. 21, No. 23, 1 Dezember 1982, MASATAKA SHIRASAKI et al. "Nonmechanical optical switch for single-mode fibers", Seiten 4229-4234
APPLIED OPTICS, Vol. 19, No. 17, 1. September 1980, R.E. WAGNER, J. CHENG "Electrically controlled optical switch for multimode fiber applications" Seiten 2921-2925
"Optics Letters" 5 (1980), p. 147-149

(73) Patentinhaber: **Philips Patentverwaltung GmbH, Wendenstrasse 35 Postfach 10 51 49, D-2000 Hamburg 1 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **FR GB IT NL SE**

(72) Erfinder: **Beckmann, Friedrich- Karl, Flagentwiete 44, D-2080 Pinneberg (DE)**
Erfinder: **Dötsch, Horst, Dr., An der Schützenburg 17, D-4500 Osnabrück (DE)**
Erfinder: **Hoppe, Wolfgang, Mühlenweg 35, D-2000 Norderstedt (DE)**

(74) Vertreter: **Nehmzow- David, Fritzi- Maria, Philips Patentverwaltung GmbH Wendenstrasse 35 Postfach 10 51 49, D-2000 Hamburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine optische Verzweigungsvorrichtung, mit zwei Polarisationsstrahlteilern zur Erzeugung und Zusammensetzung zweier senkrecht zueinander linear polarisierter Strahlenbündel, und mit einer zwischen den Polarisationsstrahlteilern angeordneten optischen Einrichtung zur Drehung der Schwingungsebene der durch sie hindurchtretenden und parallel zueinander verlaufenden Strahlenbündel, welche aus einem Faraday-Rotator, einer $\lambda/2$-Platte und einer Magnetisierungseinrichtung zur Magnetisierung des Faraday-Rotators besteht und welche die Polarisationsrichtung der Strahlung unverändert läßt oder um 90° dreht, wobei die Polarisationsstrahlteiler aus jeweils zwei aus amorphem Material hergestellten Baukörpern bestehen, die mit ebenen Flächen aufeinander liegen, von denen eine die Basisfläche eines Prismas ist, auf welcher jeweils eine rhomboedrische Platte derart aufliegt, daß die Strahlenbündel aus dem aus Prisma und Platte bestehenden Polarisationsstrahlteiler an der der optischen Einrichtung gegenüberliegenden Seite parallel zueinander verlaufend austreten, und wobei die beiden Polarisationsstrahlteiler um die Längachse der Verzweigungsvorrichtung um 180° gegeneinander verdreht sind.

Von H. Iwamura und J. Suemune in Proc. Internat. Conference on Ferrites, Sept. bis Okt. 1980, Japan, S. 787, ist bereits eine derartige optische Verzweigungsvorrichtung für den Einsatz als optischer Zirkulator vorgeschlagen worden. Die Polarisationsstrahlteiler bestehen aus jeweils zwei mit ihrer Basisfläche aufeinander liegenden Polarisationsprismen, die aus Kalkspat bestehen. Darüber hinaus ist jedem Polarisationsstrahlteiler ein optisches Umlenkelement, z. B. ein Umlenkprisma, zugeordnet, mit dem erreicht wird, daß die beiden senkrecht zueinander linear polarisierten Strahlenbündel parallel zueinander und durch die zwischen beiden Polarisationsstrahlteilern angeordnete optische Einrichtung zur Drehung der Schwingungsebene der Strahlenbündel verlaufen. Die optische Einrichtung besteht dabei aus einem Faraday-Rotator und einer $\lambda/2$-Platte.

Eine entsprechende optische Verzweigungsvorrichtung, die als optischer Schalter zum Einsatz kommt, ist beispielsweise aus der DE-A-3 231 894 bekannt. Die zwischen den beiden mit Umlenkeinrichtungen versehenen Polarisationsstrahlteilern liegende optische Einrichtung besteht hierbei aus einer Flüssigkristallschicht, die zwischen zwei Elektrodenplatten zur Erzeugung eines im Inneren der Flüssigkristallschicht verlaufenden elektrischen Feldes angeordnet ist.

Beide optischen Verzweigungsvorrichtungen weisen den Nachteil auf, daß ihre Polarisationsstrahlteiler jeweils zwei Prismen besitzen, die aus doppelbrechenden Einkristallen bestehen. Derartige Prismen sind relativ teuer und damit für eine breite Anwendung in der optischen Daten- bzw. Nachrichtentechnik ungeeignet. Von Nachteil ist ferner, daß jeweils einem Polarisationsstrahlteiler ein optisches Lichtumlenkelement, z. B. ein Spiegel oder ein Omlenkprisma, zugeordnet werden muß. Hierdurch vergrößern sich die Abmessungen derartiger optischer Verzweigungsvorrichtungen, so daß sie für den Einsatz in integrierten optischen Fasersystemen ungeeignet sind.

Eine Anordnung der eingangs genannten Art ist durch Applied Optics 21 (1982), Seiten 4229-4234 bekannt. Dort wird ein Faraday-Rotator herkömmlicher Art eingesetzt, dessen Schichtaufbau wellenlängendispersiv ist, so daß die Funktion der bekannten Anordnung nur für einen engen Wellenlängenbereich des Lichts zuverlässig ist.

Der Erfindung liegt die Aufgaße zugrunde, die letztgenannte bekannte Anordnung derart zu gestalten, daß ihre Funktion über einen größeren Wellenlängenbereich des Lichts gewährleistet ist.

Diese Aufgabe wird dadurch gelöst, daß jeweils zwischen einem Prisma und der darauf liegenden Platte eine Flüssigkristallschicht angeordnet ist, und daß der Faraday-Rotator aus mehreren in Strahlrichtung hintereinander liegenden Schichten aus magnetischem Kristallmaterial mit untereinander verschiedener Zusammensetzung besteht, deren Materialien und Schichtdicken so gewählt sind, daß die resultierende Gesamtdrehung des hindurchtretenden Strahlenbundels nur noch wenig von der Wellenlänge abhängt.

Derart aufgebaute optische Verzweigungsvorrichtungen sind relativ kostengünstig, da die Polarisationsstrahlteiler nicht mehr aus teuren einkristallinen Polarisationsprismen, z. B. Kalkspat-Prismen, aufgebaut sind. Vielmehr können die zu jeweils einem Polarisationsstrahlteiler gehörenden Baukörper (Prisma und rhomboedrische Platte) aus Glas oder einem anderen geeigneten transparenten Kunststoff bestehen, wobei zwischen beiden eine ebene Schicht aus einem Flüssigkristall liegt. Die Verwendung von Flüssigkristallen zur polarisationsteilung ist dabei bereits aus "Optics Letters", 5 (1980), Seiten 147 - 149, bekannt.

Durch die besondere Ausbildung der Polarisationsprismen wird ferner erreicht, daß auf zusätzliche Lichtablenkelemente, wie z. B. weitere Umlenkprismen oder Umlenkspiegel, verzichtet werden kann. Auf diese Weise wird eine kompakte optische Verzweigungsvorrichtung erhalten, die sich zum Einsatz in integrierten Fasersystemen der optischen Daten- bzw. Nachrichtentechnik eignet. Die Prismen bzw. rhomboedrischen Platten jeweils eines Polarisationsstrahlteilers dabei so zueinander angeordnet, daß die senkrecht zueinander und linear polarisierten Strahlenbündel nach Austritt aus jeweils einem Polarisationsstrahlteiler parallel zueinander verlaufen. Beide Polarisationsstrahlteiler sind um die Langsachse der optischen Verzweigungsvorrichtung, die parallel zu den Flüssigkeitsschichten verlauft, um 180° gegeneinander verdreht, so daß ein aus dem Prisma eines Polarisationsstrahlteilers austretendes Strahlenbundel in die zum anderen Polarisationsstrahlteiler gehörende rhomboedrische Platte eintritt, und umgekehrt.

Eine vorteilhafte Ausbildung der erfindungsgemäßen optischen Verzweigungsvorrichtung besteht darin, daß die optische Einrichtung aus einem Faraday-Rotator und einer $\lambda/2$-Platte besteht und so eingestellt ist, daß die Polarisationsrichtung der Strahlenbundel beim Durchgang durch die optische Einrichtung in einer Richtung unverandert bleibt und in entgegengesetzter Richtung vertauscht wird.

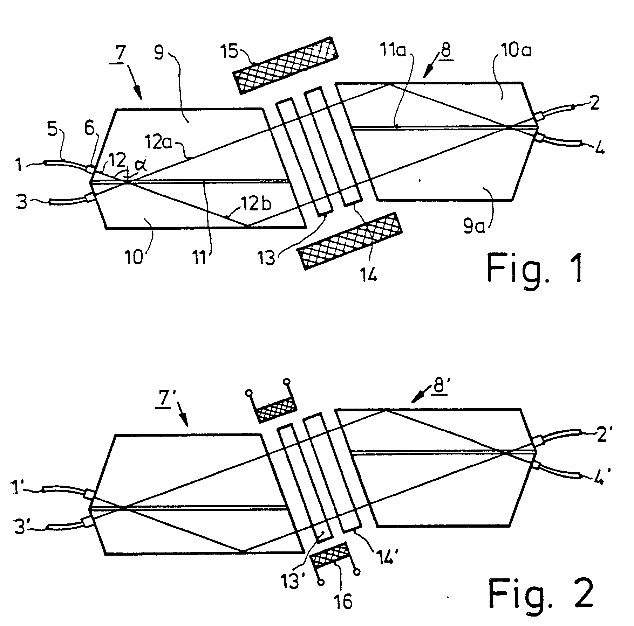

Auf diese Weise wird ein optischer Zirkulator erhalten, bei dem mehrere optische Tore, z. B. die Tore 1 bis 4 in Fig. 1, in einem bestimmten Umlaufsinn derart miteinander gekoppelt sind, daß Licht, das in das Tor 1 eintritt, nach Tor 2 gelangt, wenn es in Tor 2 eintritt, nach Tor 3 gelangt, usw.

Bei einer anderen vorteilhaften Ausbildung der optischen Verzweigungsvorrichtung besteht die optische Einrichtung aus einem Faraday-Rotator, einer $\lambda/2$-Platte und einer umschaltbaren Magnetisierungseinrichtung zur Umschaltung der Magnetisierung des Faraday-Rotators, wobei die optische Einrichtung je nach Schaltzustand die Polarisationsrichtung der Strahlung unverändert laßt oder um 90° dreht.

Hierdurch wird erreicht, daß die optische Verzweigungsvorrichtung als Schalter eingesetzt werden kann. Je nach Richtung der Magnetisierung (Fig. 2) wird z. B. das durch die Tore 1' in die Verzweigungsvorrichtung eintretende Licht zu dem Tor 2' bzw. 4' geleitet. Entsprechendes gilt, wenn das Licht durch andere Tore in die optische Verzweigungsvorrichtung eintritt.

Eine besonders vorteilhafte Ausbildung der optischen Verzweigungsvorrichtung besteht darin, ihre Oberflächen durch dielektrische Aufdampfschichten zu entspiegeln und/oder ihre einzelnen Komponenten mittels eines transparenten, optisch angepaßten Klebers miteinander zu verkleben. Hierdurch können Strahlungsverluste der Verzweigungsvorrichtung verringert werden, während durch Verkleben der einzelnen Komponenten ihre Stabilität bzw. Kompaktheit erhöht wird.

Vorteilhafterweise können die Prismen und rhomboedrischen Platten an ihren der optischen Einrichtung abgewandten Seiten mit Kollimationslinsen und Fasersteckern versehen sein, wodurch die Verzweigungsvorrichtung in optische Schaltkreise in relativ einfacher Weise integriert werden kann.

Die Zeichnung stellt Ausführungsbeispiele der Erfindung dar. Es zeigen:

Fig. 1 eine als optischer Zirkulator arbeitende Verzweigungs-Vorrichtung mit einem Permanentmagneten,

Fig. 2 eine als optischer Schalter arbeitende Verzweigungsvorrichtung mit einem umschaltbaren Magneten zur Erzeugung unterschiedlicher Schaltzustände.

Die Fig. 1 zeigt eine optische Verzweigungsvorrichtung mit vier optischen Toren 1, 2, 3 und 4, die z. B. jeweils aus einer Lichtleitfaser 5 bestehen, an deren Ende eine fokussierende Linse 6, z. B. eine zylindrische Linse mit radial verlaufendem Brechungsindexprofil (sog. Selfoc-Linse) angeordnet ist. Jeweils zwei optische Tore 1, 3 bzw. 2, 4 sind mit einem Polarisationsstrahlteiler 7 bzw. 8 der optischen Verzweigungsvorrichtung verbunden. Die Polarisationsstrahlteiler 7, 8 sind identisch aufgebaut und bestehen aus einem Prisma 9 bzw. 9a und einer auf der Basisfläche des Prismas liegenden rhomboedrischen Platte 10 bzw. 10a mit rhomboedrischem Querschnitt. Das optische Tor 1 ist demnach mit dem Prisma 9, das Tor 3 mit der rhomboedrischen Platte 10, das Tor 2 mit der rhombeodrischen Platte 10a und das Tor 4 mit dem Prisma 9a optisch verbunden. Beispielsweise konnen hierzu die Linsen 6 mit den jeweiligen Prismen bzw. Platten verkittet sein.

Zwischen dem Prisma und der rhomboedrischen Platte jeweils eines Polarisationsstrahlteilers 7, 8 befindet sich eine Flüssigkristallschicht 11, 11a, die ein auf sie auftreffendes Strahlenbündel 12 in zwei zueinander senkrecht und linear polarisierte Strahlenbündel 12a, 12b aufspaltet.

Die gegenüberliegenden Oberflächen der beispielsweise aus Glas oder einem geeigneten transparenten Kunststoff bestehenden Prismen bzw. Platten, die einen gegenseitigen Abstand von 5 bis 10 µm haben, sind durch Schleifen oder Bedampfen so behandelt, daß sich die Moleküle des Flüssigkristalls geordnet an diese Oberflächen anlegen. Bei der Vorrichtung nach Fig. 1 sind die Längsachsen der Flüssigkristall-Moleküle beispielsweise senkrecht zur Zeichenebene ausgerichtet. Die Ordnung dieser Moleküle bleibt dabei über die gesamte Schichtdicke erhalten.

Die Brechungsindizes $n_1$ und $n_2$ für Licht, das parallel bzw. senkrecht zur Molekülachse polarisiert ist, unterscheiden sich für den beispielsweise verwendeten Flüssigkristall NP1565 TN (Firma Merck) um $n_1 - n_2 = 0,14$ bei $\lambda = 589$ nm. Diese Doppelbrechung wird zur Polarisationstrennung ausgenutzt, indem für die Prismen bzw. rhomboedrischen Platten ein Material mit einem Brechungsindex n gewählt wird, der mit n1 des Flüssigkristalls übereinstimmt. Damit gelangt das Licht, das parallel zur Molekülachse, also senkrecht zur Zeichenebene schwingt, ohne Reflexionsverlust durch die Schicht des Flüssigkristalls hindurch, vergleiche Strahl 12 - 12b. Für das senkrecht zur Molekülachse und in der Zeichenebene schwingende Licht wird der Einfallswinkel des auf die Flüssigkristallschicht auftreffenden Strahlenbündels 12 so groß gewählt, daß sin $\alpha$ > $n_2$/n ist, d.h. diese Strahlung wird an der Grenzfläche Prisma 9/Flüssigkristallschicht 11 total reflektiert (vergl. Strahl 12a). Beide Polarisationsrichtungen sind damit räumlich voneinander getrennt.

Die rhomboedrische Platte 10 ist ferner so ausgebildet, daß das Strahlenbündel 12b an der Grenzfläche Platte-Luft totalreflektiert wird, und zwar in einem solchen Winkel, daß die beiden Strahlenbündel 12a, 12b den Polarisationsstrahlteiler 7 parallel zueinander verlaufend verlassen. Entsprechendes gilt für den Polarisationsstrahlteiler 8. Ferner verlaufen die in einen Polarisationsstrahlteiler ein- bzw. aus ihm austretenden Strahlenbündel jeweils senkrecht zu seiner mit Strahlung beaufschlagten Oberfläche.

Die Polarisationsebenen der beiden Strahlenbündel 12a, 12b werden in einem Faraday-Rotator 13 um jeweils +45° in Strahlrichtung gesehen gedreht. Eine nachfolgende λ/2-Platte 14 ist so eingestellt, daß diese Drehung wieder rückgängig gemacht wird. Der Polarisationsstrahlteiler 8 vereinigt beide Strahlenbündel 12a und 12b, wobei das Strahlenbündel 12b wiederum durch die Flüssigkristallschicht 11a ohne Ablenkung hindurchtritt, während das Strahlenbündel 12a an der Flüssigkristallschicht 11a totalreflektiert wird, so daß Strahlung aus dem Tor 2 austritt. Der Polarisationsstrahlteiler 8 ist zu diesem Zweck gegenüber dem Polarisationsstrahlteiler 7 um die Längsachse der optischen Verzweigungsvorrichtung um 180° gedreht, wobei die Längsachse parallel zu den Flüssigkristallschichten verläuft.

Wird dagegen Licht in das optische Tor 2 eingespeist, so addieren sich die Drehungen der Polarisationsebenen in den beiden Strahlenbundeln 12a, 12b jeweils zu 90°, so daß die Strahlung nach Tor 3 gelangt. Dies liegt daran, daß der Faraday-Rotator 13 die Schwingungsebene der Strahlung in diesem Falle um -45° in Strahlrichtung gesehen dreht, da die Magnetisierungsrichtung der den Faraday-Rotator bildenden magnetisierten Kristallschicht fest im Raum liegt. Dagegen dreht die λ/2-Platte 14 die Polarisationsebenen in Strahlrichtung gesehen jeweils in der gleichen Richtung.

In der gleichen Weise wie zuvor beschrieben wird somit Strahlung von Tor 3 nach Tor 4 und von Tor 4 zurück nach Tor 1 gekoppelt. Eine optische Verzweigungsvorrichtung dieser Art wird als optischer Zirkulator bezeichnet. Er ist aufgrund seiner beschriebenen Wirkung in der Lage, Sende- bzw. Empfangsleitungen in optischen Datenübertragungssystemen voneinander zu trennen. Beispielsweise wird ein von dem Tor 2 ausgehendes optisches Signal in die mit dem Tor 3 verbundene Sendeleitung gekoppelt, während ein von dem Tor 2 empfangenes optisches Signal aus der mit dem Tor 1 verbundenen Empfangsleitung kommt.

Eine spezielle Ausführungsform der optischen Verzweigungsvorrichtung nach Fig. 1 besitzt beispielsweise Glasprismen, die 5 mm hoch und ca. 20 mm breit sind. Die Querschnittsausdehnung der zugeordneten rhomboedrischen Platte beträgt 3 x 20 mm. Diese Abmessungen stellen keine Beschränkung der baulichen Große der Polarisationsstrahlteiler dar. Vielmehr können die Abmessungen auch erheblich kleiner gewählt werden. Statt aus Glas konnen die Prismen bzw. rhomboedrischen Platten auch aus einem anderen amorphen, optisch transparenten Material mit geeignetem Brechungsindex n, z. B. aus Kunststoff, bestehen.

Optische Zirkulatoren bzw. Verzweigungsvorrichtungen eignen sich auch zum Einsatz im infraroten Spektralbereich. Dieser Spektralbereich von etwa 0,8 bis 1,6 μm hat in letzter Zeit für die optische Datenübertragung mit Hilfe von Glasfasern erhebliche Bedeutung erlangt. Für diese Technik sind u.a. neben optischen Zirkulatoren auch optische Isolatoren und Schalter wichtig. Isolatoren lassen Licht nur in einer Richtung passieren, während sie die entgegengesetzte Richtung optisch sperren. Sie werden insbesondere eingesetzt, um eine Lichtquelle, z. B. einen Laser, vor Störreflexionen aus dem angeschlossenen optischen System zu schützen. Zirkulatoren werden u.a. dann verwendet, wenn Sende- und Empfangsleitungen optischer Systeme getrennt werden müssen, während optische Schalter dazu dienen, z. B. aus einem Eingangstor kommende Strahlung je nach Schaltzustand auf unterschiedliche Ausgangstore zu verteilen.

Für den Einsatz im infraroten Spektralbereich über 1,15 μm kann der Faraday-Rotator 13 beispielsweise aus Yttrium-Eisengranatschichten (YIG) bestehen, deren Magnetisierung senkrecht zur Schichtebene verläuft. Zur magnetischen Sättigung der Kristallschichten und damit zur Vergrösserung der Faraday-Rotation ist eine Magnetisierungseinrichtung 15 vorgesehen, die ein zusätzliches Magnetfeld erzeugt, das ebenfalls senkrecht zur Ebene der YIG-Schichten verläuft.

Der Faraday-Rotator 13 kann aber auch Schichten aus mit Wismut substituiertem Gadolinium-Eisengranat (Bi:GdIG) aufweisen. Derartige Schichten besitzen eine grössere Faraday-Rotation; sie sind ferner durch eine starke magnetische Anisotropie ausgezeichnet, so daß der Einsatz einer zusätzlichen Magnetisierungseinrichtung, z. B. eines Permanent-Magneten, entfallen kann. Auf diese Weise wird ein noch kompakterer Aufbau des optischen Zirkulators erreicht.

Da die Faraday-Rotation dispersiv ist, also von der Wellenlänge abhängt, besteht der Faraday-Rotator aus mehreren in Strahlrichtung hintereinander liegenden Schichten aus magnetischem Kristallmaterial mit untereinander verschiedener Zusammensetzung. Diese Kristallschichten sind alle in derselben Richtung magnetisiert und tragen zur Gesamt-Faraday-Rotation einen Betrag bei, der sich jeweils aus der spezifischen Faraday-Rotation einer Schicht, gemessen in Winkelgrad pro Schichtdicke, multipliziert mit der Schichtdicke der Kristallschicht ergibt. Die Kristallschichtdicken lassen sich nun so wählen, daß die Gesamtdrehung aller Kristallschichten zusammen in einem relativ großen Wellenlängenbereich praktisch nur noch sehr wenig von der Wellenlänge abhängt.

Beim Einsatz zweier Kristallschichten zur Bildung eines Faraday-Rotators 13 kann bespielsweise die eine Kristallschicht aus Yttrium-Eisengranat (YIG) und die andere Kristallschicht aus Wismut substituiertem Gadolinium-Eisengranat (Bi:GdIG) bestehen.

Der unter Fig. 1 beschriebene optische Zirkulator mit vier optischen Toren 1 bis 4 kann selbstverständlich auch als Dreitor-Zirkulator eingesetzt werden. Hierzu braucht lediglich ein optisches Tor, z. B. das Tor 3, verspiegelt zu sein. In diesem Falle würde Strahlung von Tor 1 nach Tor 2, von Tor 2 nach Tor 4 und von Tor 4 nach Tor 1 verlaufen.

Der optische Zirkulator kann auch als Isolator eingesetzt werden, beispielsweise zwischen den Toren 1 und 2. Von Tor 1 ausgehende Strahlung gelangt nach Tor 2, während die vom Tor 2 ausgehende Strahlung nicht nach Tor 1, sondern nach Tor 3 gelangt. Zur Verstärkung der Isolation kann Tor 3 durch einen reflexionsfreien Abschlus, also durch einen Absorber, abgeschlossen sein.

Eine optische Verzweigungsvorrichtung, die als optischer Schalter arbeitet, ist in Fig. 2 dargestellt. Dieser Schalter ist bis auf die Magnetisierungseinrichtung entsprechend dem optischen Zirkulator nach Fig. 1 aufgebaut. Als Magnetisierungseinrichtung ist hier eine Magnetspule 16 vorgesehen, deren Magnetfeld senkrecht zur magnetisierten Kristallschicht des Faraday-Rotators 13' verläuft. Die Kristallschicht ist ebenfalls senkrecht zu ihrer Schichtoberfläche magnetisiert. Durch entsprechende Wahl der Stromrichtung innerhalb der Spule 16 kann erreicht werden, daß die Magnetisierung der Kristallschicht des Faraday-Rotators 13' um 180° gedreht wird. Auf diese Weise lassen sich unterschiedliche Schaltzustände des optischen Schalters einstellen. Je nach Magnetisierungszustand des Faraday-Rotators 13' wird dann die Polarisationsebene des durch den Faraday-Rotator 13' hindurchtretenden Lichtes um +45° oder -45° gedreht. Dreht die nachfolgende $\lambda$/2-Platte 14' die Polarisationsebene nur um -45°, so addieren sich die Drehungen der Polarisationsebene je nach Schaltzustand zu 0° bzw. -90° Demzufolge wird aus dem Tor 1' austretende Strahlung je nach Schaltzustand bzw. Magnetisierungsrichtung innerhalb des Faraday-Rotators 13' in das Tor 2' oder in das Tor 4' gekoppelt. Das Tor 3' wäre in diesem Falle überflüssig. Selbstverständlich gilt dieses Schaltverhalten auch für drei beliebig andere wählbare Tore.

Zur Vermeidung von Störreflexionen konnen bei allen in den Fig. 1 bis 2 beschriebenen optischen Verzweigungsvorrichtungen die Oberflächen der einzelnen Komponenten, die vom Licht durchsetzt werden, mit Hilfe von dielektrischen Aufdampfschichten entspiegelt werden. Ferner ist es möglich, die einzelnen Komponenten der optischen Verzweigungsvorrichtung, wie z. B. Faraday-Rotator, $\lambda$/2-Platte und Polarisationsstrahlteiler miteinander zu verkleben, z. B. durch optischen Kitt. Durch eine geeignete Auswahl dieses optischen Kittes kann eine optische Anpassung zwischen den einzelnen Elementen erreicht werden, so daß ggf. spezielle Entspiegelungsschichten entfallen können.

**Patentansprüche**

1. Optische Verzweigungsvorrichtung, mit zwei Polarisationsstrahlteilern zur Erzeugung und Zusammensetzung zweier senkrecht zueinander linear polarisierter Strahlenbündel, und mit einer zwischen den Polarisationsstrahlteilern angeordneten optischen Einrichtung zur Drehung der Schwingungsebene der durch sie hindurchtretenden und parallel zueinander verlaufenden Strahlenbündel, welche aus einem Faraday-Rotator, einer $\lambda$/2-Platte und einer Magnetisierungseinrichtung zur Magnetisierung des Faraday-Rotators besteht und welche die Polarisationsrichtung der Strahlung unverändert läßt oder um 90° dreht, wobei die Polarisationsstrahlteiler aus jeweils zwei aus amorphem Material hergestellten Baukörpern bestehen, die mit ebenen Flächen aufeinander liegen, von denen eine die Basisfläche eines Prismas ist, auf welcher jeweils eine rhomboedrische Platte derart aufliegt, daß die Strahlenbündel aus dem aus Prisma und Platte bestehenden Polarisationsstrahlteiler an der der optischen Einrichtung gegenüberliegenden Seite parallel zueinander verlaufend austreten, und wobei die beiden Polarisationsstrahlteiler um die Längachse der Verzweigungsvorrichtung um 180° gegeneinander verdreht sind, dadurch gekennzeichnet, daß jeweils zwischen einem Prisma (9, 9a) und der darauf liegenden Platte (10, 10a) eine Flüssigkristallschicht (11, 11a) angeordnet ist, und daß der Faraday-Rotator (13, 13') aus mehreren in Strahlrichtung hintereinander liegenden Schichten aus magnetischem Kristallmaterial mit untereinander verschiedener Zusammensetzung besteht, deren Materialien und Schichtdicken so gewählt sind, daß die resultierende Gesamtdrehung des hindurchtretenden Strahlenbündels nur noch wenig von der Wellenlänge abhängt.

2. Optische Verzweigungsvorrichtung nach Anspruch 1, dadurch gekennzeichnet, daß der Faraday-Rotator (13, 13') mindestens eine Schicht aus mit Wismut substituiertem Gadolinium-Eisengranat (Bi:GdIG) enthält.

3. Optische Verzweigungsvorrichtung nach einem der Ansprüche 1 und 2,

dadurch gekennzeichnet, daß ihre Oberflächen durch dielektrische Aufdampfschichten entspiegelt sind.

4. Optische Verzweigungsvorrichtung nach einem der Ansprüche 1 bis 3,

dadurch gekennzeichnet, daß ihre Komponenten mittels eines transparenten, optisch angepaßten Klebers miteinander verklebt sind.

5. Optische Verzweigungsvorrichtung nach einem der Ansprüche 1 bis 4,

dadurch gekennzeichnet, daß die Prismen (9, 9a) und rhomboedrischen Platten (10, 10a) an ihren der optischen Einrichtung abgewandten Seiten mit Kollimationslinsen (6) und optischen Fasern (5) versehen sind.

**Claims**

1. An optical branching device comprising two polarization-sensitive beam splitters for forming and combining two linearly polarized radiation beams having mutually perpendicular polarization directions and, arranged between the polarization-sensitive beam splitters, an optical device for rotating the plane of polarization of the mutually parallel beams traversing the optical device, said device comprising a Faraday rotator, a $\lambda/2$ plate and a magnetizing device for magnetizing the Faraday rotator, the direction of polarization of the radiation being maintained or rotated through 90° by the device, the polarization-sensitive beam splitters each comprising two components made of amorphous material which are placed against each other with plane surfaces, of which one surface is the base surface of a prism, a rhombohedral plate being so arranged on the base surface of each prism that the beams emerge from the polarization-sensitive beam splitters, which each comprise a prism and a plate, parallel to each other at the side which faces the optical device, and the two polarization-sensitive beam splitters being 180° rotated relative to each other about the longitudinal axis of the branching device, characterized in that a liquid layer (11, 11a) is interposed between each prism (9, 9a) and the associated plate (10, 10a) and in that the Faraday rotator (13, 13') comprises a plurality of magnetic crystal layers of different compositions which are arranged after one another in the beam direction and whose material and layer thicknesses are selected such that the resultant overall rotation of the radiation beam traversing them is substantially independent of the wave-length.

2. An optical branching device as claimed in Claim 1, characterized in that the Faraday rotator (13, 13') comprises at least a layer of bismuth-substituted gadolinium-iron garnet (Bi:GdIG).

3. An optical branching device as claimed in any of the Claims 1 and 2, characterized in that surfaces of the device are provided with dielectric anti-reflecting coatings applied by vapour deposition.

4. An optical branching device as claimed in any of the Claims 1 to 3, characterized in that the components of the device are cemented to each other by means of a transparent optically matching adhesive.

5. An optical branching device as claimed in any of the Claims 1 to 4, characterized in that the prisms (9, 9a) and rhombohedral plates (10, 10a) are provided with collimator lenses (6) and optical fibres (5) on their sides which are remote from the optical device.

**Revendications**

1. Dispositif de branchement optique optique muni de deux diviseurs de faisceau de polarisation pour engendrer et combiner deux faisceaux polarisés de façon linéaire dans deux directions perpendiculaires, et d'un dispositif optique disposé entre les diviseurs de faisceau de polarisation et servant a tourner les plans de polarisation des faisceaux parallèles qui les traversent, dispositif optique qui est constitué d'un rotateur de Faraday, d'une lame demi-onde et d'un dispositif d'aimantation pour aimanter le rotateur de Faraday et qui laisse la direction de polarisation du rayonnement inchangée ou la tourne de 90°, les diviseurs de faisceau de polarisation étant constitués chacun de deux corps en matériau amorphe superposés par des faces planes dont une est la face de base d'un prisme sur laquelle est située une lame rhomboédrique de façon que les faisceaux sortent parallèlement l'un à l'autre du diviseur de faisceau de polarisation, constitué par le prisme et la lame, du côté situé à l'opposé du dispositif optique, les deux diviseurs de faisceau de polarisation étant tournés de 180° l'un par rapport à l'autre autour de l'axe longitudinal du dispositif de branchement, caractérisé en ce que chaque prisme (9, 9a) et la lame (10, 10a) située sur celui-ci sont séparés par une couche de cristaux liquides (11, 11a), et en ce que le rotateur de Faraday (13, 13') est constitué par plusieurs couches situées les unes derrière les autres dans la direction du faisceau et constituées par des matériaux cristallins magnétiques de compositions différentes, couches dont les matériaux et les épaisseurs ont été choisis de façon que la rotation totale ainsi obtenue du faisceau qui les traverse ne dépende que peu de la longueur d'onde.

2. Dispositif de branchement optique selon la revendication 1, caractérisé en ce que le rotateur de Faraday (13, 13') comporte au moins une couche de gadolinium-grenat ferrique substitué par du bismuth (Bi:GdIG).

3. Dispositif de branchement optique selon l'une des revendications 1 et 2, caractérisé en ce que, sur ses surfaces, sont déposées des couches diélectriques anti-reflet.

4. Dispositif de branchement optique selon l'une des revendications 1 à 3, caractérisé en ce que ses éléments sont réunis par une col le transparente optiquement adaptée.

5. Dispositif de branchement optique selon l'une des revendications 1 à 4, caractérisé en ce que, sur leurs faces situées 1 à l'opposé du dispositif optique, les prismes (9, 9a) et les lames rhomboédriques (10, 10a) sont munis de lentilles de collimation (6) et de fibres optiques (5).

Fig. 1

Fig. 2